Europäisches Patentamt

European Patent Office

Office européen des brevets

(19)

(11) Publication number: **0 148 575**
**A2**

(12) **EUROPEAN PATENT APPLICATION**

(21) Application number: **84307830.4**

(22) Date of filing: **13.11.84**

(51) Int. Cl.⁴: **G 09 G 1/16**

(30) Priority: **15.11.83 US 551809**

(43) Date of publication of application: **17.07.85**
**Bulletin 85/29**

(84) Designated Contracting States: **DE FR GB IT NL**

(71) Applicant: **MOTOROLA, INC., 1303 East Algonquin Road,**
**Schaumburg, Illinois 60196 (US)**

(72) Inventor: **Hopper, Larry Allen, 3114 East Jerome, Mesa**
**Arizona 85204 (US)**

(74) Representative: **Ibbotson, Harold et al, Motorola Ltd**
**Patent and Licensing Operations - Europe Jays Close**
**Viables Industrial Estate, Basingstoke Hampshire**
**RG22 4PD (GB)**

(54) Horizontal smooth scrolling system and method for a video display generator.

(57) A horizontal smooth scrolling system for use with a microprocessor and associated memory array in a video display generator including a shift register coupled to a serial data input for organizing the serial data into a parallel data format. A scroll register is responsive to the microcomputer for establishing a start point number for the parallel data format and a multiplexer receives the parallel data output of the shift register and the start point number from the scroll register for producing a serial data output beginning with data at a start point number of pel locations from the memory location designated by the microprocessor in the memory array.

## HORIZONTAL SMOOTH SCROLLING SYSTEM AND METHOD FOR A VIDEO DISPLAY GENERATOR

### Background of the Invention

The present invention relates, in general, to the field of horizontal smooth scrolling systems and methods for use in a video display generator. More particularly, the present invention relates to a hardware-implemented, horizontal smooth scrolling system and method of especial utility in conjunction with a microprocessor (MPU) based video display generator and provides a sophisticated video display capability without requiring a software implemented rewrite of data into memory by the MPU.

Numerous systems and methods have been described which allow for the implementation of a vertical scrolling operation in a video display system. Exemplary of some of these earlier described systems in the patented art include: United States Patent Number 4,141,003 issued to Felsenstein on February 20, 1979 for a "Control Device for Video Display Module"; United States Patent Number 4,284,988 issued to Seitz et al. on August 18, 1981 for a "Control Means to Provide Slow Scrolling Positioning and Spacing in a Digital Video Display System"; United States Patent Number 4,342,991 issued to Pope et al. on August 3, 1982 for a "Partial Scrolling Video Generator"; United States Patent Number 4,375,638 issued to O'Keefe et al. on March 1, 1983 for a "Scrolling Display Refresh Memory Address Generation Apparatus"; United States Patent Number 4,383,296 issued to Sander on May 10, 1983 for a "Computer with a Memory System for Remapping a Memory having Two Memory Output Buses for High Resolution Display with Scrolling of the Displayed Characters"; and United States Patent Number 4,386,410 issued to Pandya et al on May 31, 1983 for a "Display Controller for Multiple Scrolling Regions". Still other examples of vertical scrolling techniques include: Stockwell, D. A., "Display with Partitioned Slow Scroll", IBM Technical Disclosure Bulletin Volume 23, Number 4, September 1980 at pages 1512-1513; and Bush, H. E. and Leimer, J. J., "Data Display Terminal Display Buffer Addressing for Scrolling Operations", IBM Technical Disclosure Bulletin Volume 23, Number 6, November 1980 at pages 2507-2508.

In the implementation of a vertical scrolling function, sufficient time exists between retraced scan lines for an MPU-based video display system to change data in a memory array. Typically, the time between these vertical scan lines is on the order of 16 milliseconds. In a horizontal scrolling operation, however, the time between adjacent scan lines is on the order of 63 microseconds. Thus, the MPU would have to change memory locations within that time frame. Moreover, the intra-character resolution required to implement a horizontal scrolling operation is one picture element (PEL) time which could be on the order of 60 to 70 nanoseconds. Such speeds are far too fast for current generation MPUs and seriously detract from its ability to perform other computational functions. Thus, while it has long been desirable to implement a horizontal scrolling operation to a video display system, such an operation has been extremely more difficult to implement than a vertical scrolling function. And, while it has always been highly desirable to provide a horizontal scrolling function, all prior implementations have had inherent disadvantages in speed of operation or excessive utilization of MPU operating time, requiring as they do, that the MPU rewrite the data into the memory array each time the video display was scrolled horizontally.

## Summary of the Invention

It is therefore an object of the present invention to provide an improved horizontal smooth scrolling system and method for use with a video display generator.

It is further an object of the present invention to provide an improved horizontal smooth scrolling system and method for use with a video display generator which provides for a high speed hardware implementation of a horizontal smooth scrolling function suitable for use in high resolution video displays.

It is still further an object of the present invention to provide an improved horizontal smooth scrolling system and method for use with a video display generator which allows for horizontal smooth scrolling on a pixel-by-pixel basis.

It is still further an object of the present invention to provide an improved horizontal smooth scrolling system and method for use with a video display generator which does not require the MPU to rewrite the data into a memory array to implement a horizontal scrolling function.

The foregoing and other objects are achieved in the present invention wherein there is provided a horizontal smooth scrolling system for use with a microprocessor and associated memory array which includes means for providing a serial data input to the system from the memory array beginning at a designated memory location specified by the microcomputer. Shift register means are coupled to the serial data input providing means for organizing the serial data input into a parallel data format. Scroll register means are responsive to the microcomputer for establishing a start point number for the parallel data format. Multiplexer means receive the parallel data output of the shift register means and the start point number from the scroll register means for producing a serial data output from the parallel data format beginning with the data at a start point number of pel locations from the designated memory location.

Also provided is a horizontal smooth scrolling system and method for use with a microprocessor and associated memory array comprising means for inputting a data stream to the system from the memory array beginning at a designated memory location specified by the microcomputer. Also included are means responsive to the microcomputer for establishing a start point in the data stream and means coupled to the establishing means for outputting the data stream from the system beginning at the start point.

Brief Description of the Drawings

The above mentioned and other features and objects of the invention and the manner of attaining them will become more apparent and the invention itself will be best understood by reference to the following description of an embodiment of the invention taken in conjunction with the accompanying drawings, wherein:

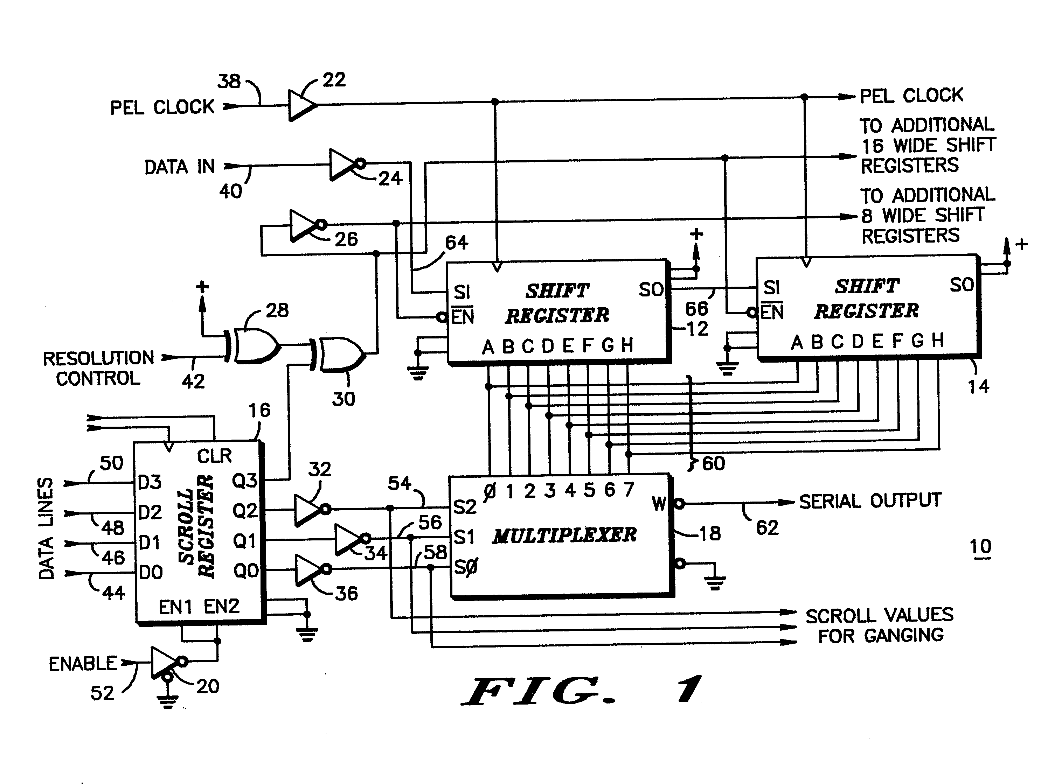

FIG. 1 is a logic flow diagram for a horizontal smooth scrolling system in accordance with the present invention; and

FIG.s 2A and 2B are simplified illustrations of a representative row of ASCII characters comprising a system virtual screen for display on a smaller visual screen useful in understanding the principles of the present invention.

Description of a Preferred Embodiment

The horizontal smooth scrolling system and method of the present invention is intended for use in a video display generator or microprocessor-controlled video display generator system having an associated memory array. For purposes of the ensuing description, the terms "pixel" and "pel" may both mean picture element. Traditionally, "pixel" refers to the smallest physical picture element, which is the resolution of the cathode ray tube (CRT) being used, and "pel" refers to the smallest logical picture element, which is set by the rest of the video system. In this description, the term "pixel" will mean the element set by the horizontal and vertical screen resolutions and "pel" will be used to refer to all other picture elements. Further, the video display generator with which the horizontal smooth scrolling system and method of the present invention may be utilized uses a block of DRAM as a "screen memory" to contain the display information. The data in this screen memory may be larger than the video display system can show at one time, and this full set of data is called the "virtual screen". The data which is currently being displayed on the video display is called the "visual screen". By use of the present invention, a user of a video display generator may "scroll" smoothly through the virtual screen, moving the visual screen as little as one pixel at a time horizontally while leaving the screen memory of the DRAM memory array unchanged.

Referring now to FIG. 1, a horizontal smooth scrolling system 10 in accordance with the present invention is shown. Horizontal smooth scrolling system 10 comprises in pertinent part eight-pel-wide shift register 12, scroll register 16, and multiplexer 18. Eight-pel-wide shift register 12 is utilized at low resolutions when 8 pels are fetched from the video display generator memory array during a single memory cycle (a horizontal resolution of 320 pixels or less) and 16-pel-wide shift register 14 will additionally be used at high resolutions when 16 pels are fetched from DRAM during one memory cycle (horizontal resolution of 512 or 640 pixels). To implement a horizontal smooth scrolling system 10 for a video display generator, additional eight-pel-wide shift registers 12, 16-pel-wide shift registers 14 and multiplexers 18 may be connected as shown.

Serial data from the video display generator DRAM utilized as screen memory is input to horizontal smooth scrolling system 10 on data-in line 40. Serial data appearing on data-in line 40 is supplied to data input line 64 of eight-pel-wide shift register 12 through inverter 24. Data appearing on data input line 64 is also supplied to 16-pel-wide shift register 14 on data input line 66 as appropriate. Clocking input to horizontal smooth scrolling system 10 for synchronization with the remainder of a video display generator is supplied on pel clock line 38 for input to eight-pel-wide shift register 12 and 16-pel-wide shift register 14 through buffer 22.

By means of a signal on resolution control line 42, switching may be effectuated between the use of only eight-pel-wide shift register 12 (horizontal resolution of 256 to 320 pixels) and the use of both eight-pel-wide shift register 12 and 16-pel-wide shift register 14 (horizontal resolution of 512 or 640 pixels). The function of this logic is to allow only 8 pel-wide scrolling for low resolution and 16 pel-wide scrolling for high resolution. Resolution control line 42 is supplied as one input to exclusive OR gate 28 having its other input connected to a source of supply voltage. The output of exclusive OR gate 28 supplys one input to exclusive OR gate 30 having its other input connected to an output of scroll register 16 as will be more fully described hereinbelow. The output of exclusive OR gate 30 is supplied as an input to inverter 26 for connection to an enabling input of eight-pel-wide shift register 12 and any additional eight-pel-wide shift registers.

The output of exclusive OR gate 30 is also supplied directly to an enabling input of 16-pel-wide shift register 14 and all additional 16-pel-wide shift registers.

An MPU in a video display generator will supply data inputs to scroll register 16 on data lines 44, 46, 48 and 50. By means of data lines 44, 46, 48 and 50, the MPU will establish a start point number within scroll register 16. This start point value is output from scroll register 16 to multiplexer 18 on scroll value lines 54, 56 and 58 as inverted through inverters 32, 34 and 36 respectively. Signals appearing on scroll value lines 54, 56 and 58 may be supplied to additional multiplexers 18 in a horizontal smooth scrolling system 10 when additional eight-pel-wide shift registers 12 and 16-pel-wide shift registers 14 are utilized. The video display generator MPU also will supply an enabling input (via external address decode logic) to scroll register 16 on enable line 52 through inverter 20 when a new start point value is to be established.

Serial data input to horizontal smooth scrolling system 10 on data-in line 40 is placed in a parallel data format by means of eight-pel-wide shift register 12 and 16-pel-wide shift register 14 on parallel data lines 60 for input to multiplexer 18. The output of multiplexer 18 is serialized for output on serial output line 62 for subsequent display in a video display generator.

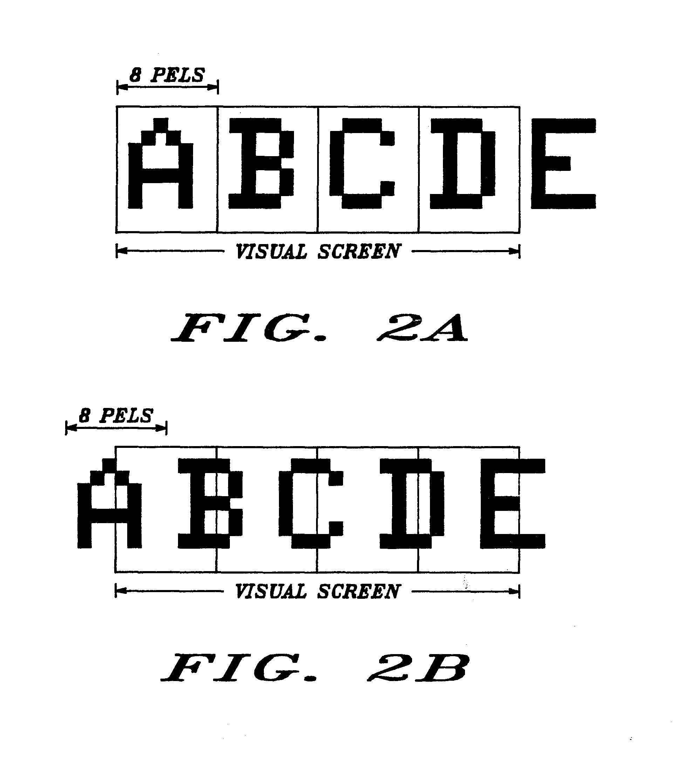

Referring additionally now to FIG.s 2A and 2B, a simplified representation of a representative row of ASCII characters from a video display generator virtual screen are shown for display on a visual screen in accordance with the technique of the horizontal smooth scrolling system 10 of the present invention. FIG. 2B, shows the visual screen being moved to the right with respect to its position in FIG. 2A which would appear to a viewer to be the characters moving, or scrolling, to the left. Each of the representative ASCII characters is shown as being eight pels wide.

In operation, the MPU will generate an address to the DRAM screen memory in a video display generator which points to the location in memory for the ASCII character "A". This designated memory location provides the starting
address for the serial data input to be supplied on data-in
line 40 of the horizontal smooth scrolling system 10. At
this point, the MPU can direct its computational functions
elsewhere and the ASCII characters "A", "B", etc. will be
retrieved from memory and placed in eight-pel-wide shift
register 12 and 16-pel-wide shift register 14. It should
be noted, that an amount of data in excess of that to be
displayed on the visual screen is clocked through the
eight-pel-wide shift register 12 and 16-pel-wide shift
register 14 at all times. It should further be noted that
the amount of data defining each ASCII character which is
fetched from the DRAM screen memory during one MPU cycle is
eight pels wide at low resolutions and 16 pels wide at high
resolutions. At such high resolutions, the clocking signal
to horizontal scrolling system 10 appearing on pel clock
line 38 will be on the order of 14 megahertz.

By means of data lines 44, 46, 48 and 50, the MPU will
also write a start point number or value into scroll
register 16. In the example of FIG. 2A, with a value of
zero written into scroll register 16, the first pixel to be
displayed on the visual screen is the leftmost pel of the
character "A". Thus, the visual screen will show the
characters "ABCD". In a scrolling operation, the MPU would
write a different value into scroll register 16 which
would, in turn, change the signals on scroll value lines
54, 56 and 58 to multiplexer 18. With the same information
still maintained in eight-pel-wide shift register 12 and
16-pel-wide shift register 14, and with a value of four
written into scroll register 16, the visual screen will
display that which is shown in FIG. 2B. That is, instead
of having the first pel of the character "A" applied to
serial output line 62, the selection process begins at the
fourth pel of the character "A". This, in turn, allows the
first four pels of the character "E" to also be displayed
on the visual screen resulting in an apparent scroll to the

0148575

left on a pel-by-pel basis. The visual screen will stay scrolled until the MPU writes a different value into scroll register 16. For a visually satisfactory display, a one-pel shift may be utilized every few seconds. It should be noted, that with a low resolution signal applied to resolution control line 42, a value of between zero and seven may be written into scroll register 16 while with a high resolution signal appearing on resolution control line 42, a value of between zero and 15 may be written into scroll register 16.

Suitable MPUs for use with a video display generator incorporating horizontal smooth scrolling system 10 include an MC6809E, MC68008 and an MC68000 available from Motorola Inc., assignee of the present invention. It should further be noticed that the various components of horizontal smooth scrolling system 10 may be integrated together in an integrated version of a video display generator.

What has been provided therefore is an improved horizontal smooth scrolling system and method for use with a video display generator which provides for a high-speed hardware implementation of a horizontal smooth scrolling function suitable for use in high resolution video displays. The horizontal smooth scrolling system of the present invention allows for horizontal smooth scrolling on a pixel-by-pixel basis and does not require the MPU to rewrite data in a memory array to implement a horizontal scrolling function.

While there have been described above the principles of the invention in conjunction with specific apparatus, it is to be clearly understood that this description is made only by way of example and not as a limitation to the scope of the invention.

CLAIMS

1. A horizontal smooth scrolling system for use with a microprocessor and associated memory array comprising:

means for providing a serial data input to said system from said memory array beginning at a designated memory location specified by said microcomputer;

shift register means coupled to said serial data input providing means for organizing said serial data input into a parallel data format;

scroll register means responsive to said microcomputer for establishing a start point number for said parallel data format; and

multiplexer means for receiving said parallel data output of said shift register means and said start point number from said scroll register means, said multiplexer means producing a serial data output from said parallel data format beginning with data at a start point number of pel locations from said designated memory location.

2. The horizontal smooth scrolling system of claim 1 wherein said shift register means comprises a plurality of shift registers.

3. The horizontal smooth scrolling system of claim 2 further comprising resolution control means for selectively enabling selected ones of said shift registers.

4. A horizontal smooth scrolling system for use with a microprocessor and associated memory array, said system comprising:

means for inputting a data stream to said system from said memory array beginning at a designated memory location specified by said microcomputer;

means responsive to said microcomputer for establishing a start point in said data stream; and

means coupled to said establishing means for outputting said data stream from said system beginning at said start point.

5.    The horizontal smooth scrolling system of claim 4 wherein said inputting means comprises a plurality of shift registers.

6.    The horizontal smooth scrolling system of claim 5 further comprising resolution control means for selectively enabling selected ones of said shift registers.

7.    The horizontal smooth scrolling system of claim 4 wherein said system comprises an integrated circuit.

8.    A method for providing horizontal smooth scrolling of a video display having a microprocessor and an associated memory array comprising the steps of:

providing a serial data input from said memory array beginning at a designated memory location specified by said microcomputer;

establishing a start point in said serial data input; and

outputting said serial data input beginning at said start point.

9.    The method of claim 8 wherein said step of establishing a start point is carried out by means of a scroll register and a plurality of shift registers.

10.    The method of claim 8 wherein said step of outputting said serial data input is carried out by means of a multiplexer.

**FIG. 1**

PEL CLOCK
TO ADDITIONAL 16 WIDE SHIFT REGISTERS
TO ADDITIONAL 8 WIDE SHIFT REGISTERS

SHIFT REGISTER  SI EN  SO  A B C D E F G H  14

SHIFT REGISTER  SI EN  SO  A B C D E F G H  12  66  64

MULTIPLEXER  ø 1 2 3 4 5 6 7  W  S2 S1 Sø  18  60

SERIAL OUTPUT  62
SCROLL VALUES FOR GANGING

10

SCROLL REGISTER  CLR  Q3 Q2 Q1 Q0  D3 D2 D1 D0  EN1 EN2  16

RESOLUTION CONTROL  42
DATA LINES  50 48 46 44
ENABLE  52  20

PEL CLOCK  38  22
DATA IN  40  24
26  28  30
32  34  36
54  56  58

8 PELS

VISUAL SCREEN

## FIG. 2A

8 PELS

VISUAL SCREEN

## FIG. 2B